Europäisches Patentamt

European Patent Office

Office européen des brevets

(11) Veröffentlichungsnummer: **0 253 977 B1**

# EUROPÄISCHE PATENTSCHRIFT

(45) Veröffentlichungstag der Patentschrift: **11.09.91**

(51) Int. Cl.⁵: **B60K 17/10**

(21) Anmeldenummer: **87106983.7**

(22) Anmeldetag: **14.05.87**

(54) Getriebe für Kraftfahrzeuge.

(30) Priorität: **24.07.86 DE 3624989**

(43) Veröffentlichungstag der Anmeldung:
**27.01.88 Patentblatt 88/04**

(45) Bekanntmachung des Hinweises auf die
Patenterteilung:
**11.09.91 Patentblatt 91/37**

(84) Benannte Vertragsstaaten:
**DE FR GB IT SE**

(56) Entgegenhaltungen:
**WO-A-87/01782          DE-A- 3 125 123**
**DE-A- 3 538 002        DE-B- 1 755 161**
**US-A- 3 123 975        US-A- 4 313 351**

(73) Patentinhaber: **MAN Nutzfahrzeuge Aktienge-**
**sellschaft**
**Dachauer Strasse 667 Postfach 50 06 20**
**W-8000 München 50(DE)**

(72) Erfinder: **Hagin, Faust**
**Poccistrasse 2**
**W-8000 München 2(DE)**
Erfinder: **Drewitz, Hans**
**Agnesstrasse 59/III**
**W-8000 München 40(DE)**
Erfinder: **Martini, Stefan**
**Auf dem Kreuz 41**
**W-7900 Ulm(DE)**

## Beschreibung

Die Erfindung betrifft ein hydrostatisch-mechanisches Leistungsverzweigungsgetriebe, insbesondere mit einem gemeinsamen Gehäuse für mindestens zwei Hydrostatmaschinen und einem Planetengetriebe.

Systeme mit den oben angeführten Komponenten in Einzelanordnung sind bekannt. Die Verbindungswege sind hier oft ungünstig und benötigen aufwendige und anfällige Verrohrungen. Ein besonderer Nachteil ist der nach außen abgestrahlte hohe Geräuschpegel, insbesondere der Hydrostatmaschinen.

Es ist eine gattungsgemäße Anordnung nach der DE-A-31 25 123 bekannt. Dem Gegenstand der Anmeldung und dem Gegenstand der DE-A-31 25 123 liegt zwar die gleiche Aufgabenstellung zugrunde, jedoch sind die Lösungswege für die identische Aufgabenstellung stark unterschiedlich, teils resultierend aus der unterschiedlichen Zuordnung der Einzelkomponenten der Getriebe. Gemäß der bekannten Lösung sind die Hydrostaten mit der Antriebswelle fluchtend verbunden und das Planetengetriebe dazu achsparallel angeordnet, des weiteren sind zwei Gehäuse vorgesehen, wodurch der Raumbedarf des Aggregates erheblich vergrößert wird.

Der Erfindung liegt die Aufgabe zugrunde, eine montagefreundliche, mechanisch-hydraulische Getriebeeinheit mit minimalem Geräuschpegel und kleinstem Raumbedarf zu schaffen.

Dies wird erfindungsgemäß dadurch erreicht, daß das Leistungsverzweigungsgetriebe ein mit der Motor- und Getriebeabtriebswelle fluchtendes Planetengetriebe, mindestens zwei zum Planetengetriebe achsparallel angeordnete Hydrostatmaschinen, einen Steuer- oder Verbindungsblock und eine Zwischenwelle mit Übersetzungsstufe und Kupplung sowie Kupplungen aufweist, daß die Verbindungslinien der Achsen der Hydrostatmaschinen und des Planetengetriebes ein Dreieck bilden und die Hydrostatmaschinen, mit ihren Umfangsflächen den Hüllkreis des Planetengetriebes tangierend angeordnet sind, daß das Planetengetriebe in bekannter Weise vier Wellen aufweist, wobei in mindestens einem Betriebsbereich Antrieb und Abtrieb und jede Hydrostatmaschine jeweils auf eine andere Welle des Planetengetriebes wirksam setzbar ist und vorzugsweise mindestens eine der Hydrostatmaschinen über Kupplung in einen anderen Betriebsbereich umschaltbar ist und daß die Hydrostatmaschine und der Verbindungs- oder Steuerblock als vormontierte Einheit, vorzugsweise in U-Form miteinander verbunden sind.

Eine so gestaltete Einheit erfordert nur einen minimalen Platzbedarf und kann im übrigen kostengünstig vormontiert werden. Ein wesentlicher erfinderischer Gedanke aber ist die Anordnung der aus den verschiedenen Elementen vormontierten Einheit aus Hydrostatmaschinen und Steuerblock, die mit den anderen Komponenten des Getriebes gesamtheitlich in einem die Elemente mit geringem Abstand umgebenden Gehäuse angeordnet sind. Solcherart, also zum einen durch das Gehäuse, zum anderen aber - und dies ist von gleicher Bedeutung - durch die kombinierte Masse von zwei Hydrostatmaschinen und Steuerblock mit schwingungstechnisch gesehen kleineren Amplituden und günstigem Masseverhalten wird eine erhebliche Geräuschpegelreduzierung des vor allem von den Hydrostatmaschinen ausgehenden Lärmes erzielt. Durch die Leistungsverzweigung über das Planetenradgetriebe mit einer zusätzlichen Zwischenwelle kommt es zu einer Leistungsminderung in den Hydrostatmaschinen, was eine weitere Senkung des Geräuschpegels bewirkt. Durch die Schaltung, welche auf der Zwischenwelle erfolgt, wird der gesamte Wandlungsbereich erweitert und somit die notwendige hydrostatische Leistung reduziert. Indem das Gehäuse mit kurzem Abstand zu den Antriebselementen und insbesondere zu den Hydrostatmaschinen angeordnet ist, ergibt sich der besondere Vorteil, daß die Abstrahlflächen für den Schall so gering wie möglich gehalten sind. Durch die feste Verbindung von Hydrostatmaschinen und Steuerblock entfallen Verrohrungen und Verrohrungselemente, die gegebenenfalls von Zeit zu Zeit kontrolliert und deren Verschraubung nachgezogen werden müssen.

Bei allen Fahrzuständen kann immer in einem derartigen Bereich gefahren werden, daß die Hydrostatmaschinen mit der geringstmöglichen Leistung beaufschlagt werden, was für einen optimalen Gesamtwirkungsgrad von Bedeutung ist und weiterhin der Geräuschpegelreduzierung dient.

Nach einer speziellen Ausbildung sind bei Hydrostatmaschinen mit Schrägachsen die Steuerköpfe unter einem derartigen Winkel angeordnet, daß sich deren Enden fast berühren und sich tangential zum Hüllkreis nach oben oder unten erstrecken. Solcherart wird auch mit diesen im Raum kompliziert verlaufenden Körpern der kleinste Einbauraum für die Elemente erzielt, so daß das Gehäuse in Höhe und Breite kleinstmöglich ausgestaltet werden kann. Die vormontierte Einheit ist über Schwingmetallelemente im Gehäuse gelagert. Dies ergibt eine weitere Körperschallabsorbierung, die sich günstig auf den Gesamtgeräuschpegel auswirkt.

Die Erfindung ist dahingehend ausgebildet, daß das Gehäuse zum Einschub der Montageeinheit eine durch einen Deckel abschließbare Öffnung aufweist. Diese Bauweise ermöglicht eine besonders schnelle und günstige Montage der Getriebeeinheit mit ihren hydrostatischen Komponenten in das Gehäuse.

Die Hydrostatmaschinen sind mit dem Planetengetriebe über Achsenversatz, Winkelversatz und Torsion ausgleichende Kupplungen, z. B. über Schwingmetalle, miteinander verbunden. Solcherart ist es möglich, Montageungenauigkeiten optimal auszugleichen und die übertragenen Schwingungen zu dämpfen. In Fortsetzung, günstige Montagebedingungen zu schaffen, sind die elastischen Kupplungen von Vorsatzschalen umschlossen, vor dem Gehäuse angeordnet und über Steckachsen von den Stirnflächen aus montierbar. Die von unten oder oben eingeschobenen Einheiten können solcherart ohne Behinderung miteinander verbunden werden. Die Vorsatzschalen verhindern darüber hinaus den Austritt von Schall an der Vorderwand des Gehäuses.

Eine schwingungsisolierte Einsteck-Rohrverbindung, vorzugsweise gelenkig ausgelegt, ist zwischen dem Gehäuse und dem Steuer- bzw. Verbindungsstück zum Einschub der vormontierten Einheit angeordnet. Hier wird das von der Speisepumpe über den Ölfilter eingebrachte Drucköl durch das Gehäuse in den Steuer- bzw. Verbindungsblock eingespeist. Die Einrichtung der Verbindungsteile ist so ausgestaltet, daß auch Rohrschwingungen nicht nach außen übertragen werden. Gleicherweise können die Anschlüsse zum Kühler oder Druckspeicher gestaltet werden.

Weitere Vorteile und Merkmale der Erfindung sind den Ansprüchen, der Beschreibung und den Zeichnungen zu entnehmen.

Die Erfindung ist in einem Ausführungsbeispiel dargestellt. Es zeigen:

Fig. 1     das Getriebe in schematischer Draufsicht,

Fig. 2     eine Vorderansicht des Getriebes.

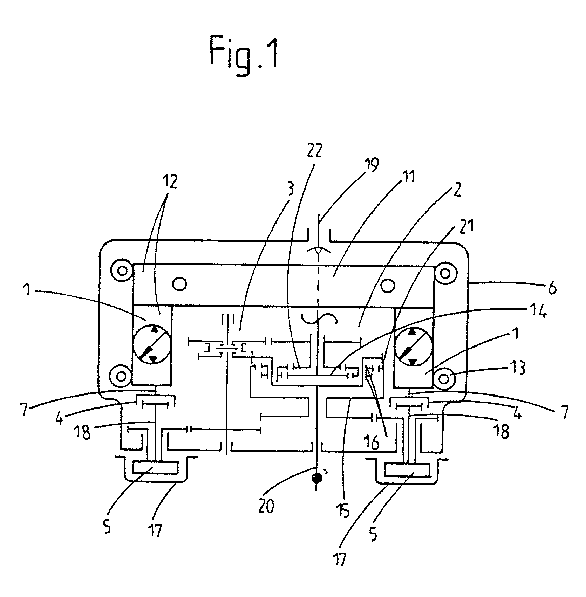

Fig. 1 zeigt zwei Hydrostatmaschinen (1), die mit einem Steuer- oder Verbindungsblock (11) fest zu einer vormontierten Einheit (Joch) (12) verbunden sind. Die Hydrostatmaschinen stehen über z. B. Bogenzahnkupplungen (4) und elastische Kupplungen (5) mit einem Planetengetriebe (2) und einem Schaltgetriebe mit einer Zwischenwelle (3) in Wirkverbindung. Die Getriebeelemente sind in einem Gehäuse (6) angeordnet, wobei die vormontierte Einheit (12) über 4 Schwingmetallelemente (13) lärmisoliert im Gehäuse (6) gelagert ist. Das Planetengetriebe (2) besteht vorzugsweise aus einem 4-welligen Doppelplanetenradsatz. Die Sonne (14) ist mit der Antriebswelle des Motors verbunden, der Planetensteg (15) mit der Abtriebswelle (20). Eine Hydrostatmaschine ist stets mit dem Hohlrad (21), die andere im Anfahrbereich mit der Abtriebswelle (20) und in einem zweiten Bereich mit dem kleinen Sonnenrad (22) verbunden. Das Gehäuse (6) weist eine Öffnung zum Einschub der hydraulischen Getriebeeinheit auf, so daß diese problemlos einschiebbar und montierbar ist. Die elastischen Kupplungen (5) sind über Steckachsen (18) mit den Bogenzahnkupplungen (4) und den Abtriebswellen (7) verbunden. Um im Stirnflächenbereich austretenden Schall zu verhindern, sind über den elastischen Kupplungen (5) Vorsatzschalen (17) vorgesehen.

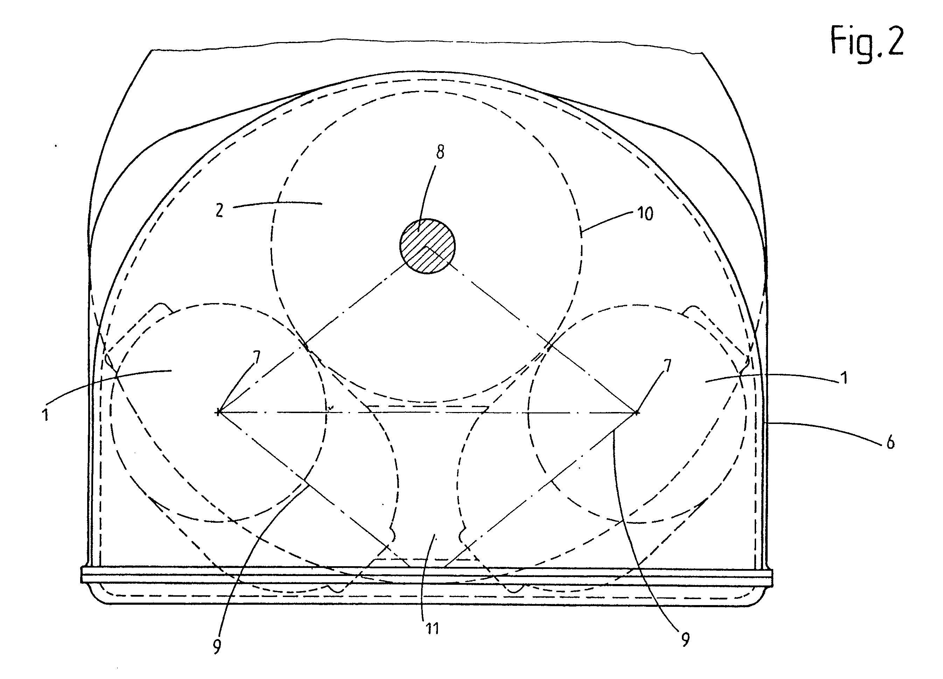

Fig. 2 zeigt das Getriebe in der Vorderansicht (Zwischenwelle nicht eingezeichnet), wobei insbesondere die Zuordnung von Planetengetriebe und Hydrostatmaschinen deutlich erkennbar ist, so nämlich, daß die Verbindungslinien der Achsen ein Dreieck ergeben. Sind die Hydrostatmaschinen, wie vielfach handelsüblich, mit Schrägachsen (9) versehen, so sind diese in etwa tangential zum Hüllkreis (10) des Planetengetriebes, vorzugsweise unter 45°, ausgerichtet. Solcherart wird der kleinstmögliche Raumbedarf für die gesamten Elemente mit geringsten Höhen- und Breitenabmessungen erzielt. Dies gilt vor allem für die schwierige bauliche Ausgestaltung der Hydrostatmaschinen.

## Patentansprüche

1. Hydrostatisch-mechanisches Leistungsverzweigungsgetriebe, insbesondere mit einem gemeinsamen Gehäuse für mindestens zwei Hydrostatmaschinen und einem Planetengetriebe, dadurch gekennzeichnet,

   - daß das Leistungsverzweigungsgetriebe ein mit der Motor- und Getriebeabtriebswelle (19, 20) fluchtendes Planetengetriebe (2), mindestens zwei zum Planetengetriebe achsparallel angeordnete Hydrostatmaschinen (1), einen Steuer- oder Verbindungsblock (11) und eine Zwischenwelle mit Übersetzungsstufe und Kupplung sowie Kupplungen (4, 5) aufweist,

   - daß die Verbindungslinien der Achsen der Hydrostatmaschinen (1) und des Planetengetriebes (2) ein Dreieck bilden und die Hydrostatmaschinen mit ihren Umfangsflächen den Hüllkreis des Planetengetriebes tangierend angeordnet sind,

   - daß das Planetengetriebe (2) in bekannter Weise vier Wellen aufweist, wobei in mindestens einem Betriebsbereich Antrieb und Abtrieb und jede Hydrostatmaschine (1) jeweils auf eine andere Welle des Planetengetriebes wirksam setzbar ist und vorzugsweise mindestens eine der Hydrostatmaschinen über Kupplung in einen anderen Betriebsbereich umschaltbar ist und

   - daß die Hydrostatmaschine (1) und der Verbindungs- oder Steuerblock (11) als vormontierte Einheit (12), vorzugsweise in U-form miteinander verbunden sind.

2. Getriebe nach Anspruch 1, dadurch gekennzeichnet, daß bei Hydrostatmaschinen (1) mit Schrägachsen (9) die Steuerköpfe unter einem derartigen Winkel angeordnet sind, daß sich deren Enden fast berühren und diese sich dann gential zum Hüllkreis (10) des Planetengetriebes nach oben oder unten erstreckt.

3. Getriebe nach Anspruch 1 oder 2, dadurch gekennzeichnet, daß die vormontierte Einheit (12) als Joch auch in Form eines Z-Teils oder T-Teils ausgebildet sein kann.

4. Getriebe nach den Ansprüchen 1 bis 3, dadurch gekennzeichnet, daß die vormontierte Einheit (12) über Schwing-Metall-Elemente (13) im Gehäuse (6) gelagert ist.

5. Getriebe nach einem oder mehreren der Ansprüche 1 bis 4, dadurch gekennzeichnet, daß das Gehäuse (6) zum Einschub der vormontierten Einheit (12) eine durch einen Deckel abschließbare Öffnung aufweist.

6. Getriebe nach einem oder mehreren der Ansprüche 1 bis 5, dadurch gekennzeichnet, daß mindestens eine schwingungsisolierte Einsteck-Rohrverbindung zum Einschub zwischen Gehäuse (6) Steuer- oder Verbindungsblock (11) angeordnet ist.

7. Getriebe nach einem oder mehreren der Ansprüche 1 bis 6, dadurch gekennzeichnet, daß die Hydrostatmaschinen (1) mit dem Planetengetriebe (2) über Achsenversatz, Winkelversatz und Torsion ausgleichende Kupplungen (4, 5) verbunden sind.

8. Getriebe nach Anspruch 7, dadurch gekennzeichnet, daß die Kupplung (4) als Bogenzahnkupplung und die Kupplung (5) als elastische Kupplung ausgebildet sind.

9. Getriebe nach einem oder mehreren der Ansprüche 1 bis 8, dadurch gekennzeichnet, daß die elastischen Kupplungen (5), von Vorsatzschalen (17) umschlossen, vor dem Gehäuse (6) angeordnet und über Steckachsen (18) von einer Stirnfläche aus montierbar sind.

## Claims

1. A hydrostatic-mechanic torque-division gearing, in particular with a common housing for at least two hydrostatic machines and a planetary gearing, characterised
   - in that the torque-division gearing has a planetary gearing (2) which is flush with the motor output shaft and gearing output shaft (19, 20), at least two hydrostatic machines (1) arranged axially parallel in relation to the planetary gearing, a control or connecting block (11) and an intermediate shaft with transmission stage and coupling as well as couplings (4, 5),
   - in that the connecting lines of the axes of the hydrostatic machines (1) and of the planetary gearing (2) form a triangle and the peripheral faces of the hydrostatic machines are arranged so as to be tangent to the enveloping circle of the planetary gearing,
   - in that - in known manner - the planetary gearing (2) has four shafts and, in at least one of the working ranges drive and output, each hydrostatic machine can in each case be placed effectively on another shaft of the planetary gearing and preferably at least one of the hydrostatic machines can be switched over via coupling into another working range and
   - in that the hydrostatic machine (1) and the connecting or control block (11) are interconnected as pre-assembled unit (12), preferably in the shape of a U.

2. A gearing according to Claim 1, characterised in that, in the case of hydrostatic machines (1) with inclined axes (9), the control heads are arranged at such an angle that their ends almost touch and these then extend upwards or downwards tangentially in relation to the enveloping circle (10) of the planetary gearing.

3. A gearing according to Claim 1 or 2, characterised in that the pre-assembled unit (12) can be formed as a yoke, also in the form of a Z part or T part.

4. A gearing according to Claims 1 to 3, characterised in that the pre-assembled unit (12) is mounted in the housing (6) via vibration-damping connector elements (13).

5. A gearing according to one or more of Claims 1 to 4, characterised in that the housing (6) has an opening, which can be closed by means of a lid, for the insertion of the pre-assembled unit (12).

6. A gearing according to one or more of Claims 1 to 5, characterised in that at least one vibrationally-insulated inserting pipe-connection is arranged so as to be inserted between housing (6) and control or connecting block (11).

7. A gearing according to one or more of Claims 1 to 6, characterised in that the hydrostatic machines (1) are connected to the planetary gearing (2) via couplings (4, 5) which equilibrate axial misalignment, angular misalignment and torsion.

8. A gearing according to Claim 7, characterised in that the coupling (4) is formed as arched tooth coupling and the coupling (5) is formed as resilient coupling.

9. A gearing according to one or more of Claims 1 to 8, characterised in that the resilient couplings (5), enclosed by attachment shells, are arranged in front of the housing (6) and can be mounted from a front face via inserting axles (18).

**Revendications**

1. Boîte de vitesses de dérivation de puissance mécanique-hydrostatique, notamment à boîtier commun pour au moins deux machines hydrostatiques et une transmission planétaire, caractérisée en ce que :
   - la transmission de dérivation de puissance comprend une transmission planétaire (2) alignée sur l'axe du moteur et sur l'axe de sortie de la boîte de vitesses (19, 20), au moins deux machines hydrostatiques (1) en parallèle sur l'axe de la transmission planétaire, un bloc de commande ou de liaison (11) et un axe intermédiaire avec un étage de démultiplication et un embrayage ainsi que des embrayages (4, 5),
   - en ce que les lignes de liaison des axes des machines hydrostatiques (1) et de la transmission planétaire (2) forment un triangle et les machines hydrostatiques sont tangentes par leur surface périphérique au cercle enveloppe de la transmission planétaire,
   - la transmission planétaire (2) comporte de manière connue quatre axes dont au moins un se situe dans la zone d'entrée et dans la zone de sortie et chaque machine hydrostatique (1) se monte de manière active sur un autre axe de la transmission planétaire et de préférence au moins l'une des machines hydrostatiques peut commuter dans une autre plage de fonctionnement par l'intermédiaire d'un embrayage et
   - les machines hydrostatiques (1) et le bloc de liaison ou de commande (11) est un ensemble préassemblé (12), de préférence en forme de U.

2. Transmission selon la revendication 1, caractérisée en ce que dans le cas de machines hydrostatiques (1) à axe incliné (9), les têtes de commande font un angle tel que leurs extrémités se touchent presque et soient tangentes au cercle enveloppe (10) de la transmission planétaire vers le haut ou vers le bas.

3. Boîte de vitesses selon la revendication 1 ou 2, caractérisée en ce que l'ensemble pré-assemblé (12) est une pièce en forme de U ou en forme de Z ou en forme de T.

4. Transmission selon les revendications 1 à 3, caractérisée en ce que l'ensemble pré-assemblé (12) est monté dans le boîtier (6) par l'intermédiaire d'éléments métalliques oscillants (13).

5. Transmission selon l'une ou plusieurs des revendications 1 à 4, caractérisée en ce que le boîtier (6) comporte une ouverture fermée par un couvercle pour recevoir par glissement l'ensemble pré-assemblé (12).

6. Boîte de vitesses selon l'une ou plusieurs des revendications 1 à 5, caractérisée par au moins une liaison tubulaire d'emmanchement, isolée vis-à-vis des oscillations pour être glissée entre le boîtier (6) et le bloc de commande et de liaison (11).

7. Boîte de vitesses selon l'une ou plusieurs des revendications 1 à 6, caractérisée en ce que les machines hydrostatiques (1) sont reliées à la transmission planétaire (2) par l'intermédiaire d'un jeu d'axes, un jeu de renvois d'angle et des accouplements (4, 5) de compensation de torsion.

8. Boîte de vitesses selon la revendication 7, caractérisée en ce que l'accouplement (4) est un accouplement à arc denté et l'accouplement (5) est un accouplement élastique.

9. Boîte de vitesses selon l'une ou plusieurs des revendications 1 à 8, caractérisée en ce que les accouplements élastiques (5) sont entourés par des coquilles de protection (17) placées devant le boîtier (6) et se démontent par des axes enfichés (18) à partir d'une surface frontale.

# Fig.1

Fig.2

EP 0 253 977 B1